# DEMANDE DE BREVET EUROPEEN

(11) **EP 4 650 146 A1**
(43) Date de publication de la demande: **19.11.2025**
(21) Numéro de dépôt: 25174191.4
(22) Date de dépôt: 05.05.2025
(51) Int. Cl.: B29C 49/64, B29C 49/78, B29C 35/08

(54) **PROCEDE DE REALISATION D'UN RECIPIENT A PARTIR D'UNE PREFORME CHAUFFEE**

(30) Priorité: 17.05.2024 FR 2405081
(71) Demandeur: Sidel Participations, 76930 Octeville-sur-Mer (FR)
(72) Inventeur: DERRIEN, Mikaël, 76930 OCTEVILLE-SUR-MER (FR); LETESTU, Mickaël, 76930 OCTEVILLE-SUR-MER (FR)
(74) Mandataire: Sidel Group

(57) **Abrégé**

Le procédé de réalisation comprend les étapes suivantes :
- déterminer deux zones formées (20) dans un corps (16) du récipient (1), chaque zone formée (20) correspondant à une zone chauffée (32) d'un corps (28) de la préforme (2),
- chauffer le corps (28) de la préforme (2) au moyen d'au moins deux éléments de chauffage (10), chaque élément de chauffage (10) chauffant l'une des zones chauffées (32),
- déformer la préforme (2) chauffée pour former le récipient (1).

Le procédé comprend, avant l'étape de chauffage du corps (28) de la préforme (2), une étape de réglage dans laquelle la puissance de chauffage de chaque élément de chauffage (10) est ajustée en fonction de la quantité de matière dans la zone formée (20) correspondant à la zone chauffée (32) par chaque élément de chauffage (10).

## Description

La présente invention concerne un procédé de réalisation d'un récipient par déformation d'une préforme chauffée, le récipient comprenant un corps s'étendant selon un axe de récipient, ledit procédé de réalisation comprenant les étapes suivantes :
- déterminer au moins deux zones formées selon l'axe de récipient dans le corps, lesdites zones formées étant réalisées à partir d'une quantité de matière différente, chaque zone formée du corps du récipient correspondant à au moins une zone chauffée d'un corps de la préforme,
- chauffer le corps de la préforme au moyen d'au moins deux éléments de chauffage, chaque élément de chauffage chauffant l'une des zones chauffées du corps de la préforme,
- déformer la préforme chauffée pour former le récipient.

Il est connu de chauffer la préforme dans une installation de production de récipients afin de rendre la préforme malléable et permettre sa déformation ultérieure par exemple par étirage soufflage de sorte à réaliser un récipient à partir de la préforme chauffée. En fonction de la forme du corps du récipient à réaliser, la matière du récipient dans différentes zones de ce corps est plus ou moins étirée, ce qui rend la répartition de matière dans le corps du récipient non uniforme, une zone plus étirée contenant moins de matière qu'une zone moins étirée. Plus une zone du corps du récipient doit être étirée, plus la puissance de chauffage de la zone correspondante du corps de la préforme doit être importante. En d'autres termes, les différentes zones de la préforme doivent pouvoir être chauffées à des températures différentes.

Pour ce faire, la préforme est par exemple mise en circulation dans une unité de traitement thermique, ou four, dans laquelle la préforme défile devant des éléments de chauffage. Les éléments de chauffage sont notamment répartis selon la hauteur du corps de la préforme, c'est-à-dire sensiblement parallèlement à l'axe de préforme selon lequel s'étend le corps de la préforme, afin de permettre de chauffer à des températures maitrisées plusieurs zones du corps de la préforme réparties sur la hauteur de la préforme. Les puissances de chauffage des différents éléments de chauffage permettent ainsi d'appliquer un profil de températures à une préforme, ce profil dépendant des caractéristiques du récipient à réaliser à partir de cette préforme ainsi que de la matière de la préforme.

Afin d'assurer un chauffage correct de la préforme, il est connu de mettre en place une boucle de régulation, dans laquelle le réglage de la puissance de chauffage des éléments de chauffage est asservi à la température de préformes chauffées mesurée en une zone de la préforme à l'issue du chauffage des préformes. La répartition de la chaleur dans la préforme est déterminée en fonction de la mesure d'une température de référence mesurée en une zone de la préforme et la puissance de chauffage des éléments de chauffage est ajustée en fonction de cette température de référence pour approcher le profil de températures à appliquer aux préformes.

Une telle boucle de régulation ne donne cependant pas entière satisfaction. En effet, notamment pour des zones de la préforme éloignées de la zone dans laquelle la température de référence a été mesurée, le réglage de la puissance de chauffage reste fondé sur cette température de référence, ce qui rend le réglage approximatif.

L'un des buts de l'invention est de pallier ces inconvénients en proposant un procédé de réalisation d'un récipient, dans lequel la puissance de chauffage des éléments de chauffage peut être ajustée de façon précise afin d'appliquer un profil de températures correspondant précisément au profil souhaité à la préforme à partir de laquelle le récipient est réalisé au cours de son chauffage.

A cet effet, l'invention concerne un procédé de réalisation d'un récipient du type précité, comprenant, avant l'étape de chauffage du corps de la préforme, une étape de réglage d'une puissance de chauffage de chaque élément de chauffage dans laquelle la puissance de chauffage de chaque élément de chauffage est ajustée en fonction de la quantité de matière dans la zone formée du corps du récipient correspondant à la zone chauffée par chaque élément de chauffage.

Dans le procédé de réalisation selon l'invention, la puissance de chauffage de chaque élément de chauffage est donc réglée en fonction de la répartition de matière souhaitée dans différentes zones du corps du récipient à réaliser et non en fonction d'une température mesurée dans une zone d'une préforme préalablement chauffée. En d'autres termes, la puissance de chauffage d'un élément de chauffage est réglée sur la base de la quantité de matière souhaitée dans la zone du corps du récipient correspondant à la zone du corps de la préforme chauffée par cet élément de chauffage, ce qui permet un réglage précis de cet élément de chauffage. De plus, ce réglage peut être modifié simplement par un utilisateur lorsqu'un autre type de récipient doit être produit ou que la répartition de matière dans un récipient déjà produit n'est pas satisfaisante en renseignant une nouvelle répartition de matière souhaitée dans le récipient. En outre, le réglage des puissances de chauffage peut se faire sans faire fonctionner au préalable l'unité de traitement thermique pour mettre en place une boucle de régulation.

Le procédé de réalisation selon l'invention peut en outre comprendre une ou plusieurs des caractéristiques suivantes, prises isolément ou selon toute combinaison techniquement envisageable :
- l'étape de détermination des zones formées du corps comprend une étape de répartition de la matière dans les zones formées dudit corps du récipient, dans laquelle une quantité de matière à ajouter dans au moins l'une des zones formées du corps du récipient et une quantité de matière à retirer dans au moins une autre zone formée du corps du récipient sont définies, la quantité de matière à ajouter étant sensiblement égale à la quantité de matière à retirer ;
- le corps du récipient comprend au moins trois zones formées, la préforme comprenant au moins trois zones chauffées correspondant auxdites zones formées, chaque zone chauffée étant chauffée par au moins un élément de chauffage dont la puissance de chauffage est ajustée en fonction de la quantité de matière dans la zone formée correspondante ;
- l'étape de répartition comprend la définition d'une quantité de matière à ajouter dans l'une des zones formées, d'une première quantité de matière à retirer dans une autre des zones formées et d'une deuxième quantité de matière à retirer dans encore une autre des zones formées, la quantité de matière à ajouter étant sensiblement égale à la somme de la première quantité de matière à retirer et de la deuxième quantité de matière à retirer ;
- la première quantité de matière à retirer est nulle, la quantité de matière à ajouter est sensiblement égale à la deuxième quantité de matière à retirer ;
- au moins une des zones formées correspond à au moins deux zones chauffées, les puissances de chauffage des éléments de chauffage chauffant lesdites au moins deux zones chauffées étant ajustées ensemble en fonction de la quantité de matière définie pour ladite zone formée correspondante ;
- les au moins deux zones chauffées correspondant à une zone formée sont des zones chauffées adjacentes selon un axe de préforme correspondant à l'axe de récipient ;
- chaque élément de chauffage comprend une pluralité de sources de rayonnement électromagnétique monochromatique ou pseudo-monochromatique ;
- le procédé comprend une étape de réalisation d'une ébauche de récipient, la quantité de matière dans chaque zone formée étant définie en fonction d'une mesure de l'épaisseur d'une paroi du corps de ladite ébauche de récipient ou d'une observation visuelle dudit corps ;
- chaque zone chauffée du corps de la préforme s'étend sur une hauteur, mesurée selon l'axe de récipient, comprise entre 4 mm et 5 mm.

L'invention apparaîtra plus clairement à la lecture de la description qui va suivre, donnée uniquement à titre d'exemple non limitatif, et faite en référence aux dessins dans lesquels :
[Fig 1] est une représentation schématique de dessus d'une installation de production de production de récipients permettant de mettre en œuvre le procédé de réalisation selon l'invention,
[Fig 2] est une réprésentation schématique d'une interface de renseignement d'une répartition de matière souhaitée dans un récipient à produire, permettant de mettre en œuvre le procédé selon l'invention,
[Fig 3] est une représentation schématique en coupe d'une préforme chauffée par des éléments de chauffage, et
[Fig 4] est une représentation schématique d'une autre interface de mise en œuvre d'une étape de chauffage du procédé de réalisation selon l'invention.

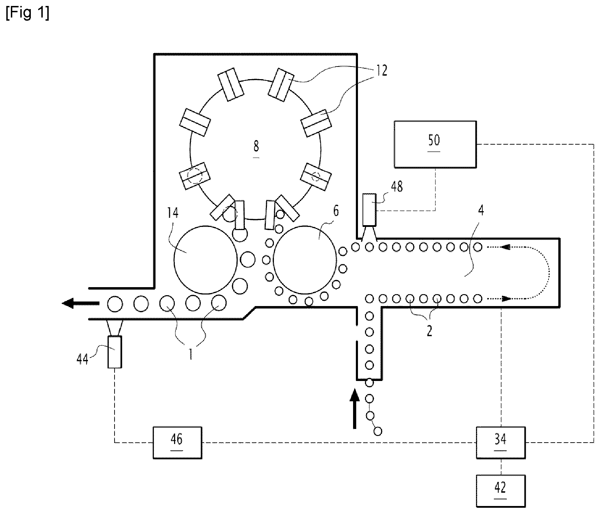

En référence à la Fig. 1, on décrit une installation de production de récipients 1 à partir d'une succession de préformes 2. Une telle installation comprend, de façon connue et dans l'ordre de circulation des préformes 2 et des récipients 1 dans l'installation, une unité de traitement themique 4, ou four, une roue de transfert 6 et une station de formage 8. L'unité de traitement thermique 4 est agencée pour chauffer une succession de préformes 2 transportées dans l'unité de traitement thermique 4 par un système de préhension et de déplacement des préformes 2 de sorte à les faire défiler devant des éléments de chauffage 10, comme cela sera décrit plus en détail ultérieurement.

En sortie de l'unité de traitement thermique 4, la roue de transfert 6 est agencée pour récupérer les préformes 2 chauffées et pour les transférer dans la station de formage 8. La station de formage 8 est par exemple formée par un caroussel portant plusieurs moules 12 formant des cavités de moulage présentant la forme des récipients 1 à réaliser. Les préformes 2 chauffées sont chacune placées dans un moule et déformées pour acquérir la forme d'un récipient 1 par exemple par étirage soufflage. En sortie de la station de formage, les récipients 1 formés sont récupérés par exemple au moyen d'une autre roue de transfert 14, par exemple pour être acheminés vers d'autres stations de l'installation, telles qu'une station d'étiquetage, une station de remplissage et une station de mise en place d'un bouchon sur les récipients.

Comme indiqué précédemment, une telle installation est connue et ne sera pas décrite plus en détail ici. Il est cependant entendu que l'agencement de l'installation représentée sur la Fig. 1 n'est donné qu'à titre d'exemple et que l'invention s'applique à tout type d'agencement d'installation dès lors que celle-ci comprend une unité de traitement thermique 4.

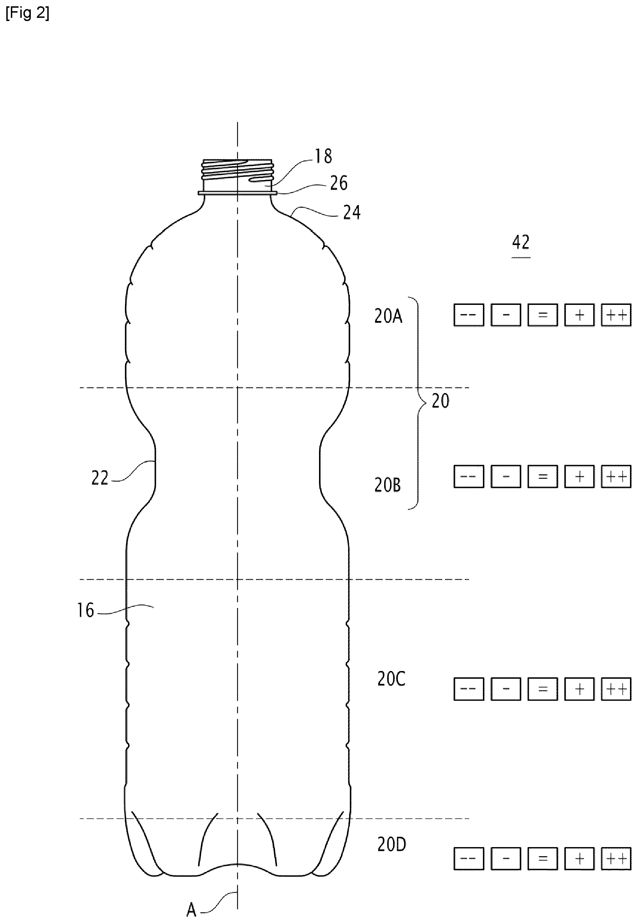

Comme représenté sur la Fig. 2, chaque récipient 1 produit par une telle installation comprend un corps 16 et un col 18. Le corps 16 s'étend selon un axe de récipient A et peut présenter toute forme souhaitée, la forme du corps 16 représentée sur la Fig. 2 n'étant donnée qu'à titre d'exemple. Plus particulièrement, la forme du corps 16 peut être définie par plusieurs zones, dites zones formées 20, une zone formée 20 donnée présentant par exemple une forme différente de la ou des zones formées 20 adjacentes à cette zone formée donnée 20 selon l'axe de récipient A. De façon générale, le corps 16 comprend au moins deux zones formées 20 selon l'axe de récipient A réalisées à partir d'une quantité de matière différente. En d'autres termes, chaque zone formée 20 contient une quantité de matière différente de l'autre zone formée 20. Cette répartition de matière est par exemple du au fait que les zones formées 20 présentent une forme différente l'une de l'autre et nécessitent un étirement de la matière différent pour être réalisées, comme cela sera décrit ultérieurement. Selon le récipient 1 à réaliser, le nombre de zones formées 20 peut varier.

Ainsi, sur l'exemple de la Fig. 2, le récipient comprend par exemple une zone formée supérieure 20A, une zone formée centrale 20B, une zone formée inférieure 20C et une zone formée de fond 20D. La zone formée centrale 20B forme un creux ou étranglement 22 par rapport aux zones formées supérieure 20A et inférieure 20C. La zone formée supérieure forme un épaulement 24 dans lequel le diamètre du récipient diminiue jusqu'au col 18. Différentes nervures ou rainures peuvent être prévues dans une ou plusieurs zones formées 20, la forme et le nombre de telles nervures ou rainures pouvent être différents selon la zone formée 20 dans laquelle elles s'étendent. Comme indiqué précédemment, du fait de ces différentes formes de zones formées 20, la quantité de matière dans chaque zone formée 20 peut être différente de la quantité de matière dans une ou plusieurs autres zones formées 20.

On entend par « quantité de matière », une masse de matière donnée, notamment du PET, pour une zone formée donnée du récipient obtenu par soufflage ou étirage soufflage, c'est-à-dire une masse surfacique s'exprimant en gramme par centimètre carré. Par exemple, la quantité de matière dans le fond d'un récipient autrement dit, la masse surfacique s'exprimant en gramme par centimètre carré, signifie qu'à différents endroits du fond du récipient formé, il a différentes épaisseurs. Dès lors, il est difficile à l'opérateur de s'appuyer sur l'épaisseur pour réaliser ou concevoir un récipient. Ce dernier s'appuiera sur la quantité de matière qu'il doit mettre sur le fond, c'est-à-dire, la masse qu'il doit rajouter ou diminuer sur le fond du récipient pour avoir une meilleure tenu du récipient, par exemple, rajouter ou enlever 0.5 gramme sur le fond.

En effet, le soufflage ou l'étirage soufflage d'une préforme pour obtenir un récipient final ne nous permet pas d'obtenir une épaisseur constante sur toute une zone formée du récipient. L'épaisseur de la paroi du récipient dans une zone formée est variable selon plusieurs paramètres tels que les caractéristiques physiques et chimiques de la matière, ainsi que des paramètres de procédé de formage alors que l'épaisseur de la paroi d'une préforme est sensiblement constante et maitrisée. Cela s'explique par le procédé de fabrication de la préforme, c'est-à-dire l'injection ou l'injection compression.

Le col 18 comprend par exemple une collerette 26 s'étendant d'un plan radial sensiblement perpendiculaire à l'axe de récipient A en saillie vers l'extérieur du corps 16. Une telle collerette 26 forme par exemple une surface de préhension de la préforme 2 et du récipient 1 réalisé à partir de la préforme 2. La partie du récipient 1 s'étendant à partir de la collerette 26 jusqu'à l'extrémité ouverte comprend par exemple un filetage permettant de fixer un bouchon sur le récipient 1. Il convient de noter que le col 18 n'est pas déformé au cours de la réalisation du récipient 1, c'est-à-dire que le col 18 présente la même forme dans la préforme 2 et dans le récipient 1 réalisé à partir de cette préforme 2. Par conséquent, le col sera désigné par la même référence numérique dans la préforme 2 et dans le récipient 1.

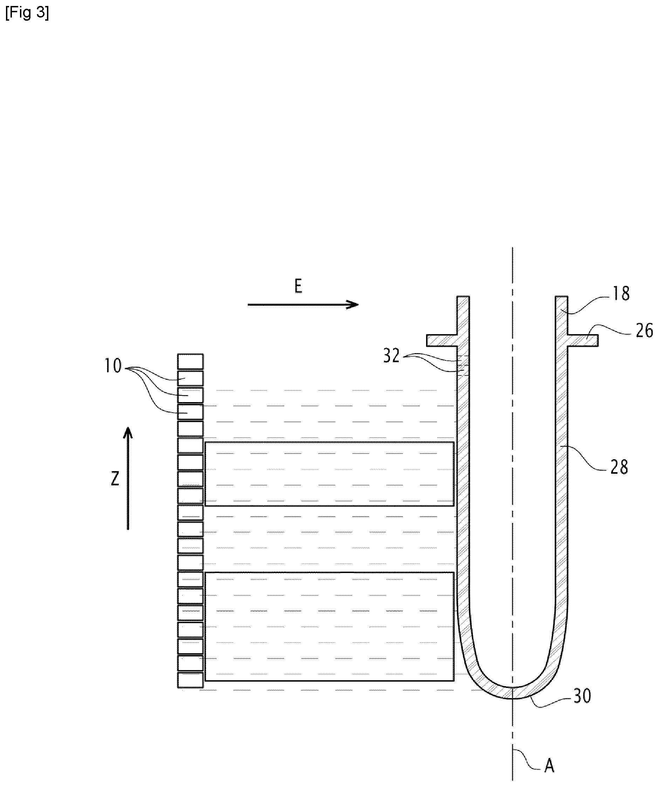

Comme décrit précédemment, le récipient 1 est obtenu par déformation et étirage d'une préforme 2 chauffée dans l'unité de traitement thermique 4. Une telle préforme, représentée sur la Fig. 3, comprend un corps 28 et un col 18 et l'unité de traitement thermique 4 est agencée pour chauffer le corps 28 sans chauffer le col 18 de chaque préforme 2, comme cela sera décrit plus en détail ultérieurement. Le corps 28 s'étend selon un axe de préforme, correspondant à l'axe de récipient A et désigné par la même référence sur la Fig. 3, et présente par exemple la forme d'un tube à essai s'étendant entre un fond 30 et le col 18, qui forme une extrémité ouverte du tube à essai.

L'unité de traitement thermique 4 est agencée pour chauffer le corps 28 de chaque préforme 2 afin d'augmenter la température du corps 28 au-dessus de la température de transition vitreuse du matériau formant le corps 28 de sorte que le corps 28 acquiert un caractère malléable permettant sa déformation pour former un récipient 1.

A cet effet et comme représenté sur la Fig .3, la pluralité de préformes 2 est agencée pour circuler en regard d'au moins deux éléments de chauffage 10 agencés pour émettre un rayonnement thermique vers le corps des préformes 2 passant en regard. Plus particulièrement, les éléments de chauffage 10 sont disposés l'un au-dessus de l'autre selon une direction d'élévation Z de l'unité de traitement thermique 4, sensiblement parallèle à l'axe de préforme A lorsqu'une préforme 2 est placée dans l'unité de traitement thermique 4. Ainsi, les éléments de chauffage 10 sont disposés de sorte à exposer l'ensemble du corps 28 des préformes 2 au rayonnement, plus particulièrement du fond 30 à la collerette 26 des préformes 2. Chaque élément de chauffage 10 est plus particulièrement agencé pour chauffer une zone, dite zone chauffée 32, du corps 28 d'une préforme 2, la zone chauffée 32 s'étendant sur une partie de la hauteur du corps de la préforme 2, mesurée selon l'axe de préforme A. En d'autres termes, le corps 28 de chaque préforme 2 comprend au moins deux zones chauffées 32 disposées l'une au-dessus de l'autre selon l'axe de préforme A, chaque zone chauffée 32 s'étendant en regard d'un élément de chauffage 10 correspondant de sorte à être exposée à la chaleur émise par cet élément de chauffage 10 correspondant lorsque la préforme 2 circule dans l'unité de traitement thermique 4. En variante, l'unité de traitement thermique 4 comprend au moins une cavité de chauffage agencée pour chauffer individuellement chaque préforme 2. En d'autres termes, les préformes 2 ne circulent alors pas dans l'unité de traitement thermique 4. Une telle méthode de chauffage est connue sous le terme « chauffe à la cavité ».

Chaque élément de chauffage 10 comprend par exemple une pluralité de sources de rayonnement électromagnétique monochromatique ou pseudo-monochromatique. Plus particulièrement, chaque élément de chauffage 10 est par exemple un émetteur laser et les sources de rayonnement sont des puces laser agencées pour émettre un rayonnement laser dans le domaine de l'infrarouge selon une direction d'émission E sensiblement perpendiculaire à la direction d'élévation Z et correspondant à la direction séparant les éléments de chauffage 10 du corps 28 des préformes 2 circulant dans l'unité de traitement thermique 4. Les sources de rayonnement sont par exemple agencées les unes à côté des autres sur un support de sorte à former au moins une rangée de sources de rayonnement s'étendant selon la direction longitudinale. Selon un mode de réalisation, les sources de rayonnement forment au moins une rangée supérieure et au moins une rangée inférieure disposées l'une au-dessus de l'autre selon la direction d'élévation.

De tels éléments de chauffage sont par exemple décrits dans le document FR 3 124 030 et l'homme du métier pourra se référer à ce document pour obtenir plus de détails, notamment en ce qui concerne la structure de chaque source de rayonnement, l'agencement des sources de rayonnement sur un support, la connexion des sources de rayonnement entre elles et le refroidissement des éléments de chauffage. Il est entendu que l'invention n'est pas limitée à des éléments de chauffage formés par des émetteurs laser et s'applique également à d'autres types d'élément de chauffage, tels que des lampes tubulaires à incandescence de type halogène ou microonde.

Il convient cependant de noter que l'invention est particulièrement adaptée à des émetteurs laser car de tels émetteurs laser émettent un rayonnement très peu dispersif, c'est-à-dire principalement orienté selon la direction d'émission E, à la différence d'éléments de chauffage halogène qui présentent un cône d'émission du rayonnement particulièrement grand. Ainsi, les émetteurs laser permettent de chauffer une zone chauffée 32 très localisée du corps 28 de la préforme 2, tandis qu'un élément de chauffage halogène chauffera une zone plus étendue et le rayonnement émis par cet élément de chauffage et/ou la réflexion de ce rayonnement dans l'unité de traitement thermique 4 risquent d'interférer avec le rayonnement émis par un autre élément de chauffage et ainsi chauffer une zone chauffée autre que celle pour laquelle il est prévu, ce qui réduit l'efficacité du réglage de l'unité de traitement thermique 4 qui va être décrit ultérieurement.

Avec de tels émetteurs laser, chaque zone chauffée 32 présente par exemple une hauteur sensiblement comprise entre 4 mm et 5 mm, par exemple sensiblement égale à 4.7 mm. Selon un mode de réalisation, une préforme 2 présente entre dix-huit et trente-six zones chauffées 32, l'unité de traitement thermique 4 comprenant au moins autant d'éléments de chauffage 10 agencés en une colonne s'étendant selon la direction d'élévation Z, chaque élément de chauffage 10 de la colonne étant agencé pour chauffer une des zones chauffées 32 correspondantes en fonction de la hauteur du corps 28 des préformes 2.

Selon un mode de réalisation, l'unité de traitement thermique comprend plusieurs colonnes d'éléments de chauffage 10 disposés les unes à côtés des autres selon la direction de circulation des préformes 2 dans l'unité de traitement thermique 4 de sorte que les préformes défilent devant une succession d'éléments de chauffage 10 lorsqu'elles circulent dans l'unité de traitement thermique 4. En d'autres termes, une zone chauffée 32 du corps 28 d'une préforme 2 est chauffée par une pluralité d'éléments de chauffage 10 s'étendant à une même hauteur selon la direction d'élévation Z alors que la préforme 2 circule dans l'unité de traitement thermique 4. Selon un mode de réalisation, la préforme 2 est en outre entraînée en rotation sur elle-même autour de son axe de préforme A pendant qu'elle circule dans l'unité de traitement thermique 4 de sorte que toute la circonférence du corps 16 est exposée au rayonnement des éléments de chauffage 10. Ainsi, chaque zone chauffée 32 s'étend sur toute la circonférence d'une portion du corps 28 de chaque préforme 2. Cependant, comme cela sera décrit ultérieurement, dans le cas d'une déformation asymétrique du corps 28 de la préforme 2 dans une zone chauffée 32, la température de cette zone chauffée 32 n'est pas uniforme sur toute la circonférence de la préforme.

La puissance de chauffage de chaque élément de chauffage 10 est ajustable au moyen d'un dispositif de commande 34 de l'unité de traitement thermique 4. Le dispositif de commande 34 permet ainsi d'ajuster l'intensité du chauffage de chaque zone chauffée de la préforme 2 afin de gérer le profil de température qui lui est appliqué. En effet, de façon connue, les zones chauffées 32 d'une même préforme 2 ne sont pas nécessairement chauffées à une température uniforme. La température d'une zone chauffée 32 dépend notamment de la forme du récipient 1 à produire à partir de la préforme 2. Plus particulièrement, comme décrit précédemment, plus une zone donnée d'une préforme 2 doit être déformée, ou étirée, pour former le récipient 1, plus la température à laquelle elle doit être chauffée est haute. Ainsi, en se référant à l'exemple de forme de récipient 1 représentée sur la Fig. 2, les zones du corps 16 s'étendant au voisinage du col 18, formant l'épaulement 24 dans la zone formée supérieure 20A, et les zones du corps de la zone formée inférieure 20C du corps 16 s'étendant au voisinage du fond pourraient être chauffées à une température plus grande que celle nécessaire pour les zones s'étendant au niveau de l'étranglement 22 s'étendant sensiblement à mi-hauteur du récipient 1 dans la zone formée centrale 20B.

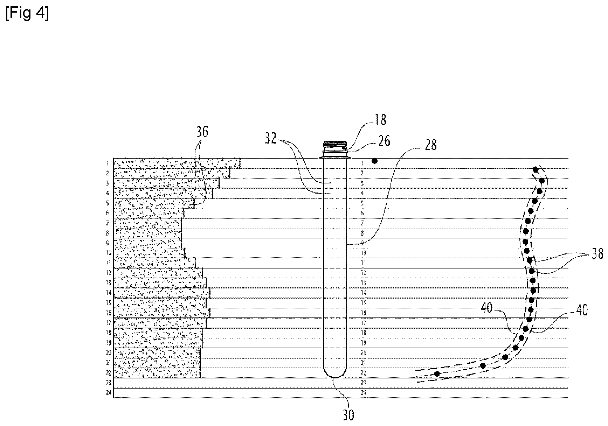

Chaque zone formée 20 d'un récipient 1 correspond ainsi à au moins une zone chauffée 32 d'une préforme 2 correspondante. Généralement, une zone formée 20 correspond plutôt à au moins deux ou plus zones chauffées 32 adjacentes selon l'axe de préforme A. Ainsi, en reprenant l'exemple de forme de récipient 1 représentée sur la Fig. 2, la zone formée centrale 20B correspond aux zones chauffées 32 chauffées par les éléments de chauffage 10 numérotées 6 à 10 sur la Fig. 4.

Comme représenté sur la Fig. 4, le dispositif de commande 34 permet ainsi d'ajuster la puissance de chauffage d'un élément de chauffage 10 particulier, comme représenté par l'histogramme à gauche sur la Fig.4, en fonction de la température à laquelle doit être chauffer la zone chauffée 24 correspondant à cet élément de chauffage particulier 10, comme représenté sur le graphique de droite de la Fig.4. Sur cette figure montrant un exemple d'un affichage du réglage appliqué par le dispositif de commande 34 aux éléments de chauffage, les éléments de chauffage 10 sont au nombre de vingt-quatre, numérotés de 1 à 24, et des barres 36 de l'histogramme représentent chacune la puissance de chauffage d'un de ces éléments de chauffage 10 en fonction de la zone chauffée 32 de la préforme 2 en regard de ces éléments de chauffage 10. Sur la Fig. 4, le corps de la préforme 2 comprend vingt-deux zones chauffées 32. Sur le graphique de droite, chaque point 38 représente la température souhaitée, dite température de chauffage cible, pour la zone chauffée 32 correspondante. En observant cette figure, on constate ainsi que plus la température de chauffage cible d'une zone chauffée 32 est élevée, plus la puissance de chauffage de l'élément de chauffage 10 correspondant est importante. Sur l'exemple de la Fig. 4, on constate par exemple que la puissance de chauffage des éléments de chauffage 6 à 10 est sensiblement inférieure à la puissance de chauffage des autres éléments de chauffage, ce qui permet de réaliser l'étranglement 22 du récipient 1 représenté sur la Fig. 2.

La puissance de chauffage 10 est ajustée pour que chaque zone chauffée 32 soit chauffée à une température de chauffage sensiblement égale à la température de chauffage cible correspondante en fonction de la quantité de matière souhaitée dans une zone formée 20 correspondant à la zone chauffée 32, comme cela sera décrit plus en détail ultérieurement. Il convient de noter que par « sensiblement égal », on entend que la température de chauffage cible est située ou non dans une plage acceptable autour de la température de chauffage cible, comme représenté par les deux courbes 40 en pointillés représentées autour des points 38 sur le graphique de droite de la Fig. 4. En d'autres termes, la température de chauffage cible est située entre une température de chauffage acceptable basse, inférieure à la température de chauffage cible, et une température de chauffage acceptable haute, supérieure à la température de chauffage cible. Selon un mode de réalisation, les températures de chauffage acceptables correspondent à plus ou moins 2% de la température de chauffage cible. Il convient de noter que les deux courbes 40 de températures de chauffage acceptables ne sont pas nécessairement symétriques l'une de l'autre par rapport aux températures de chauffage cibles. En d'autres termes, l'écart entre la température de chauffage acceptable basse et la température de chauffage cible et l'écart entre la température de chauffage cible et la température de chauffage acceptable haute peuvent, pour chaque point, être différents l'un de l'autre. Lorsque l'unité de traitement thermique 4 comprend plusieurs colonnes d'éléments de chauffage 10, la puissance de chauffage des éléments de chauffage 10 d'une même ligne, c'est-à-dire les éléments de chauffage 10 s'étendant à la hauteur selon la direction d'élévation Z, est constante. Ainsi, lorsque le dispositif de commande 34 commande la puissance de chauffage d'un élément de chauffage 10 particulier, cette puissance de chauffage est appliquée à tous les éléments de chauffage 10 situés à la même hauteur que cet élément de chauffage particulier. Cependant, dans le cas où le récipient 1 à former présente au moins une zone formée 20 dans laquelle la section n'est pas circulaire, la puissance de chauffage des éléments de chauffage 10 situées à la hauteur de cette zone formée 20 peut être modulée pour permettre une déformation asymétrique de la préforme 2 dans cette zone.

Le procédé de réalisation selon l'invention prévoit de faire défiler une préforme dans l'unité de traitement thermique 4 en regard des éléments de chauffage 10 au cours d'une étape de chauffage, la puissance de chauffage de chaque élément de chauffage 10 étant réglée par le dispositif de commande 34 en fonction de la quantité de matière souhaitée dans chaque zone formée 20 du récipient 1 à réaliser au cours d'une étape de réglage de la puissance de chauffage de chaque élément de chauffage 10, comme indiqué précédemment. A cet effet, le dispositif de commande 34 de l'unité de traitement thermique 4 comprend par exemple une interface 42 homme machine de renseignement d'une répartition de matière souhaitée dans un récipient à produire, représentée sur la Fig. 2. Sur cette interface, un opérateur peut agir sur la quantité de matière souhaitée dans une zone formée 20 particulière, par exemple au moyen des icônes - -, -, =, + et ++ représentées sur la Fig. 2. L'icône - - est utilisée pour indiquer que la quantité de matière dans la zone formée 20 correspondante doit être réduite de façon importante, l'icône - pour une réduction de la quantité de matière plus faible, l'icône = pour une quantité de matière inchangée, l'icône + pour une augmentation de la quantité de matière et l'icône ++ pour une augmentation de la quantité de matière plus importante. La puissance de chauffage de la ou des Il est entendu que ces icônes ne sont données qu'à titre d'exemple et que d'autres types d'icônes ou d'entrées pourraient être utilisés pour indiquer la quantité de matière souhaitée dans une zone formée 20, tels que des chiffres ou nombres.

Le dispositif de commande 34 est configuré pour modifier la puissance de chauffage du ou des éléments de chauffage 10 de la ou des zones chauffées 32 correspondant à chaque zone formée 20 du récipient en fonction des informations saisies par l'opérateur. Ainsi, en reprenant l'exemple d'interface 42 représentée sur la Fig. 2, si l'opérateur a interagi avec l'icône + pour une zone formée 20 donnée, le dispositif de commande 34 est configuré pour réduire la puissance de chauffage du ou des éléments de chauffage 10 chauffant la ou les zones chauffées 32 correspondant à cette zone formée 20 donnée. Si l'opérateur a intéragi avec l'icône - pour une zone formée 20 donnée, le dispositif de commande 34 est configuré pour augmenter la puissance de chauffage du ou des éléments de chauffage 10 chauffant la ou les zones chauffées 32 correspondant à cette zone formée 20 donnée. Si les icônes ++ ou - - sont actionnées, la puissance de chauffage est réduite ou augmentée de façon plus importante. Si l'icône = est actionnée, la puissance de chauffage 10 reste inchangée.

Lors d'un réglage initial de l'unité de traitement thermique 4, le récipient 1 présenté sur l'interface 42 est par exemple un récipient obtenu lorsque la répartition de la quantité de matière est uniforme dans tout le corps 16 du récipient 1. En fonction de la forme souhaitée de récipient, l'opérateur actionne les icônes pour modifier cette répartition de quantité de matière dans les différentes zones formées 20 au cours d'une étape de répartition de la matière dans les zones formées 20 du corps 16 du récipient 1 au cours d'une étape de détermination des zones formées 20 du corps 16. Le dispositif de commande 34 modifie la puissance de chauffage des éléments de chauffage 10 en conséquence.

Ainsi, par exemple pour réaliser la zone formée centrale 20B présentant un étranglement 22, l'opérateur intéragit avec l'icône + ou ++ pour indiquer que la quantité de matière souhaitée dans cette zone formée centrale 20B est plus importante et le dispositif de commande 34 réduit la puissance de chauffage des éléments de chauffage 10 chauffant les zones chauffées 32 correspondant la zone formée centrale 20B, par exemple les éléments de chauffage 10 numérotés 7 à 9 sur la Fig. 4. Dans la mesure où une transition doit être faite entre l'étranglement 22 et les zones formées 20 adjacentes, le dispositif de commande 34 adapte également la puissance de chauffage des éléments de chauffage 10 numérotés 6 et 10 pour qu'elle soit située entre la puissance de chauffage des éléments de chauffage 10 numérotés 7 à 9 et la puissance de chauffage de l'élément de chauffage 10 numéroté 5 et de l'élément de chauffage 10 numéroté 11, comme visible sur la Fig. 4.

De même, pour réaliser une zone formée supérieure 20A présentant un épaulement 24, l'opérateur intéragit avec l'icône - ou - pour indiquer que la quantité de matière dans cette zone formée supérieure 20B est moins importante et le dispositif de commande 34 augmente la puissance de chauffage de l'élément de chauffage 10 numéroté 1 sur la Fig. 4 et adapte la puissance des éléments de chauffage 10 numérotés 2 à 5 pour pouvoir assurer la transition avec la zone formée centrale 20B.

Lorsque l'opérateur a modifié la quantité de matière dans une zone formée 20 donnée, il est invité par l'interface 42 à modifier la quantité de matière dans une ou plusieurs autres zones formées 20 en conséquence. En effet, pour une quantité de matière totale donnée pour un récipient, si la quantité de matière dans une zone formée 20 est augmentée, la quantité de matière dans au moins une autre zone formée 20 doit être réduite de façon correspondante. En d'autres termes l'étape de détermination des zones formées 20 comprend une étape de répartition de la matière dans les zones formées 20 du corps 16 du récipient 1, dans laquelle une quantité de matière à ajouter dans au moins l'une des zones formées 20 du corps 16 du récipient 1 et une quantité de matière à retirer dans au moins une autre zone formée 20 du corps 16 du récipient 1 sont définies, la quantité de matière à ajouter étant sensiblement égale à la quantité de matière à retirer. Par « sensiblement égale », on entend que ces quantités de matière sont égales à 5% près. Lorsque le récipient 1 comprend au moins trois zones formées 20, l'étape de répartition comprend la définition d'une quantité de matière à ajouter dans l'une des zones formées 20, d'une première quantité de matière à retirer dans une autre des zones formées 20 et d'une deuxième quantité de matière à retirer dans encore une autre des zones formées 20, la quantité de matière à ajouter étant sensiblement égale à la somme de la première quantité de matière à retirer et de la deuxième quantité de matière à retirer. Si la quantité de matière ne peut pas être modifiée dans l'une des zones formées, c'est-à-dire si la première quantité de matière à retirer est par exemple nulle, alors la quantité de matière à ajouter est sensiblement égale à la deuxième quantité de matière à retirer. En reprenant l'interface 42 représentée sur la Fig. 2, cela signifie concrètement que si l'opérateur interagit avec l'icône + dans une zone formée 20, il est invité à interagir avec l'icône - dans une autre zone formée 20 de son choix. Si l'opérateur interagit avec l'icône ++ dans une zone formée 20, il est invité à interagir avec l'icône - - dans une autre zone formée 20 ou avec l'icône - dans deux autres zones formées 20.

Selon un mode de réalisation, en variante ou en complément du mode de réalisation décrit ci-dessus, le dispositif de commande 34 est configuré pour modifier de façon automatique la quantité de matière dans une zone formée 20 pour tenir compte d'une modification par l'opérateur de la quantité de matière dans une autre zone formée 20. Ainsi, par exemple, si l'opérateur intéragit avec l'icône + dans une première zone formée 20 et avec l'icône = dans une deuxième zone formée 20, le dispositif de commande 34 réduit de façon automatique la quantité de matière dans une troisième zone formée 20 lorsque le récipient comprend trois zones formées 20.

Selon un mode de réalisation, le procédé prévoit de réaliser au moins une ébauche de récipient 1 avec le réglage initial effectué par l'opérateur et l'opérateur et/ou le dispositif de commande 34 peut modifier le réglage au moyen de l'interface 42 suite à l'observation du récipient réalisé pour modifier la répartition de matière en conséquence si la forme de récipient obtenue n'est pas conforme à la forme de récipient souhaitée. Cette observation peut par exemple se faire en mesurant l'épaisseur de la paroi de l'ébauche de récipient 1 obtenu dans les différentes zones formées 20 et de comparer les épaisseurs mesurées avec les épaisseurs souhaitées. En fonction de cette comparaison, l'opérateur et/ou le dispositif de commande 34 peuvent modifier le réglage de l'unité de traitement thermique 4 pour adapter la puissance de chauffage des éléments de chauffage 10 en conséquence. Ainsi, si l'épaisseur mesurée dans une zone formée 20 donnée est inférieure à l'épaisseur souhaitée dans cette zone formée 20, cela signifie qu'il n'y a pas assez de matière dans cette zone formée 20. L'opérateur peut alors modifier la répartition de la quantité de matière dans le récipient pour augmenter la quantité de matière souhaitée dans cette zone formée 20 donnée. En variante ou en complément, le dispositif de commande 34 peut modifier directement la puissance de chauffage des éléments de chauffage 10 correspondant à cette zone formée 20 donnée pour augmenter la quantité de matière dans cette zone formée 20 donnée. A cet effet, l'installation de production de récipients 1 comprend par exemple un dispositif de mesure de l'épaisseur 44 placé en sortie de la station de formage 8 ou en aval de l'autre roue de transfert 14, comme représenté sur la Fig. 1. Les épaisseurs sont acquises par un dispositif de traitement 46 du dispositif de mesure d'épaisseur 44 et sont transmises au dispositif de commande 34 pour fournir l'information au dispositif de commande 34 et/ou à l'opérateur.

En variante ou en complément, l'observation du récipient peut être une observation visuelle afin de détecter des défauts dans le corps 16 de celui-ci, tels que des traces de brûlure, de surétirage et/ou apparation d'une crystalisation. En effet, si une zone chauffée 32 du corps de la préforme 2 est chauffée à une température supérieure à la température cible, de tels défauts peuvent apparaitre dans la zone formée 20 correspondante du corps 16 du récipient 1 et n'être visibles qu'une fois le récipient réalisé. Il convient alors de modifier le réglage de la puissance de chauffage de l'élément de chauffage 10 correspondant pour éviter l'apparition de tels défauts. A cet effet, l'installation de production de récipients 1 comprend par exemple un dispositif d'acquisition d'images du récipient 1 obtenu en sortie de la station de formage 8 à la place ou en plus du dispositif de mesure de l'épaisseur 44. Selon un mode de réalisation, le dispositif de mesure de l'épaisseur 44 et le dispositif d'acquisition d'images sont formés par un même moyen d'acquisition, tel qu'une caméra thermographique. Il est également entendu que l'observation visuelle du récipient peut également être faite à l'oeil nu par un opérateur qui modifie le réglage de l'unité de traitement thermique 4 si il observe l'apparition de défauts dans le corps 16 du récipient 1.

En complément, une boucle de régulation peut être mise en place pour modifier la puissance de chauffage des éléments de chauffage 10 en fonction d'une ou plusieurs températures mesurées en une ou plusieurs zones chauffées 32 des préformes 2 après que celles-ci ont circulé dans l'unité de traitement thermique 4. La puissance de chauffage des éléments de chauffage est alors modifiée par le dispositif de commande 34 si un écart est constaté entre la ou les températures mesurées et la ou les températures cibles des zones chauffées 32. A cet effet, l'installation de production comprend par exemple un dispositif de mesure 48 de la température d'au moins une zone chauffée 32 au voisinage de la sortie de l'unité de traitement thermique 4. De préférence, le dispositif de mesure 48 est agencé pour mesurer la température de chaque zone chauffée 32 d'une préforme 2 ayant été chauffée par les éléments de chauffage 10 correspondants de l'unité de traitement thermique 4. Un tel dispositif de mesure 48 est par exemple formé par une caméra thermique agencée en sortie de l'unité de traitement thermique et acquérant une image, par exemple dans le domaine infrarouge, de chaque préforme 2 chauffée transmise à la roue de transfert 6, comme représenté sur la Fig. 1. En variante, le dispositif de mesure 48 comprend un ou plusieurs pyromètres agencés chacun pour mesurer la température d'une zone chauffée 32 du corps 28 d'au moins une préforme 2. Les températures sont acquises par un dispositif de traitement 50 du dispositif de mesure 48 et sont transmises au dispositif de commande 34.

Le dispositif de commande 34, l'interface 42 et, éventuellement, le dispositif de traitement 46 du dispositif de mesure d'épaisseur 44 (et/ou du dispositif d'acquisition d'images) et le dispositif de traitement 50 du dispositif de mesure de température 48 sont propre à mettre en œuvre un procédé de réalisation décrit ci-dessus.

Ces dispositifs sont des circuits électroniques conçus pour manipuler et/ou transformer des données représentées par des quantités électroniques ou physiques dans des registres des dispositifs et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, les dispositifs de commande 26 et de traitement 36, 44 sont réalisés sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

En variante, lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles. Le procédé de réalisation selon l'invention permet de régler de façon simple et intuitive la puissance de chauffage des éléments de chauffage 10 en fonction de la forme du récipient 1 que l'on souhaite réaliser. L'opérateur n'a pas besoin d'agir directement sur la puissance de chauffage pour établir le profil de températures cibles voulu ou d'établir lui-même ce profil de températures cibles pour régler l'unité de traitement thermique 4. En effet, le lien entre le profil de températures cibles et la forme de récipient obtenue avec un tel profil est complexe et nécessite généralement de procéder par tâtonnement pour obtenir le récipient voulu lorsque l'unité de traitement thermique 4 est réglé en renseignant le profil de températures cibles, ce qui nécessite de faire fonctionner l'unité de traitement thermique 4 pendant un certain temps avant d'obtenir le résultat souhaité. Avec le procédé selon l'invention, le réglage peut se faire sans faire fonctionner l'unité de traitement thermique 4 et un réglage définitif peut être obtenu en faisant éventuellement fonctionner l'installation de production 1 pendant peu de temps pour obtenir une ébauche de récipient et affiner le réglage en conséquence.

## Revendications

1. Procédé de réalisation d'un récipient (1) par déformation d'une préforme (2) chauffée, le récipient (1) comprenant un corps (16) s'étendant selon un axe de récipient (A), ledit procédé de réalisation comprenant les étapes suivantes :
- déterminer au moins deux zones formées (20) selon l'axe de récipient (A) dans le corps (16), lesdites zones formées (20) étant réalisées à partir d'une quantité de matière différente, chaque zone formée (20) du corps (16) du récipient (1) correspondant à au moins une zone chauffée (32) d'un corps (28) de la préforme (2),
- chauffer le corps (28) de la préforme (2) au moyen d'au moins deux éléments de chauffage (10), chaque élément de chauffage (10) chauffant l'une des zones chauffées (32) du corps (28) de la préforme (2),
- déformer la préforme (2) chauffée pour former le récipient (1), **caractérisé en ce qu'**il comprend, avant l'étape de chauffage du corps (28) de la préforme (2), une étape de réglage d'une puissance de chauffage de chaque élément de chauffage (10) dans laquelle la puissance de chauffage de chaque élément de chauffage (10) est ajustée en fonction de la quantité de matière dans la zone formée (20) du corps (16) du récipient (1) correspondant à la zone chauffée (32) par chaque élément de chauffage (10).

2. Procédé de réalisation selon la revendication 1, dans lequel l'étape de détermination des zones formées (20) du corps (16) comprend une étape de répartition de la matière dans les zones formées (20) dudit corps (16) du récipient (1), dans laquelle une quantité de matière à ajouter dans au moins l'une des zones formées (20) du corps (16) du récipient (1) et une quantité de matière à retirer dans au moins une autre zone formée (20) du corps (16) du récipient (1) sont définies, la quantité de matière à ajouter étant sensiblement égale à la quantité de matière à retirer.

3. Procédé de réalisation selon la revendication 1 ou 2, dans lequel le corps (16) du récipient (1) comprend au moins trois zones formées (20), la préforme (2) comprenant au moins trois zones chauffées (32) correspondant auxdites zones formées (20), chaque zone chauffée (32) étant chauffée par au moins un élément de chauffage (10) dont la puissance de chauffage est ajustée en fonction de la quantité de matière dans la zone formée (20) correspondante.

4. Procédé de réalisation selon la revendication 2 et 3, dans lequel l'étape de répartition comprend la définition d'une quantité de matière à ajouter dans l'une des zones formées (20), d'une première quantité de matière à retirer dans une autre des zones formées (20) et d'une deuxième quantité de matière à retirer dans encore une autre des zones formées (20), la quantité de matière à ajouter étant sensiblement égale à la somme de la première quantité de matière à retirer et de la deuxième quantité de matière à retirer.

5. Procédé de réalisation selon la revendication 4, dans lequel lorsque la première quantité de matière à retirer est nulle, la quantité de matière à ajouter est sensiblement égale à la deuxième quantité de matière à retirer.

6. Procédé de réalisation selon l'une quelconque des revendications 3 à 5, dans lequel au moins une des zones formées (20) correspond à au moins deux zones chauffées (32), les puissances de chauffage des éléments de chauffage (10) chauffant lesdites au moins deux zones chauffées (32) étant ajustées ensemble en fonction de la quantité de matière définie pour ladite zone formée (20) correspondante.

7. Procédé de réalisation selon la revendication 6, dans lequel les au moins deux zones chauffées (32) correspondant à une zone formée (20) sont des zones chauffées (32) adjacentes selon un axe de préforme correspondant à l'axe de récipient (A).

8. Procédé de réalisation selon l'une quelconque des revendications 1 à 7, dans lequel chaque élément de chauffage (10) comprend une pluralité de sources de rayonnement électromagnétique monochromatique ou pseudo-monochromatique.

9. Procédé de réalisation selon l'une quelconque des revendications 1 à 8, comprenant une étape de réalisation d'une ébauche de récipient, la quantité de matière dans chaque zone formée (20) étant définie en fonction d'une mesure de l'épaisseur d'une paroi du corps (16) de ladite ébauche de récipient ou d'une observation visuelle dudit corps (16).

10. Procédé de réalisation selon l'une quelconque des revendications 1 à 9, dans lequel chaque zone chauffée (32) du corps (28) de la préforme (2) s'étend sur une hauteur, mesurée selon l'axe de récipient (A), comprise entre 4 mm et 5 mm.
